# EUROPÄISCHE PATENTANMELDUNG

(11) **EP 2 463 196 A1**
(43) Veröffentlichungstag der Anmeldung: **13.06.2012**
(21) Anmeldenummer: 11009087.5
(22) Anmeldetag: 16.11.2011
(51) Int. Cl.: B64C 1/14

(54) **Passiver Eigenschutz für Fahrzeuge, insbesondere für Flugobjekt, und Objekte mit wenigstens einem Fenster**

(30) Priorität: 10.12.2010 DE 102010054131
(71) Anmelder: Rheinmetall Waffe Munition GmbH, 29345 Unterlüss (DE)
(72) Erfinder: Ten Have, Eric, 29223 Celle (DE); Gowin, Michael, Dr., 29320 Hermannsburg (DE)
(74) Vertreter: Dietrich, Barbara

(57) **Zusammenfassung**

Um zu erreichen, dass beispielsweise Flugzeugpiloten insbesondere bei der Überwachung sicherheitsrelevanter Vorgänge nicht mittels Laserpointer geblendet werden, schlägt die Erfindung vor, retroreflektierendes Material (3) großflächig um die Fenster (2) des Flugzeuges (1) anzuordnen, welches auf das Material auftreffendes Laserlicht (5) zu dem Verwender des Laserlichtes (5) zurückreflektiert. Von dem zurückreflektierten Laserlicht (6) wird die entsprechende Person dann selbst geblendet.

## Beschreibung

Die Erfindung betrifft einen passiven Eigenschutz für Fahrzeuge, Flugzeuge, insbesondere einen Hubschrauber, etc. und Objekte zur Überwachung beispielsweise sicherheitsrelevanter Vorgänge, wie Demonstrationen, mit mindestens einem Fenster zur Beobachtung der Vorgänge, der sich dadurch auszeichnet, dass ein reflektierendes, vorzugsweise sogar retroreflektierendes Material großflächig um die Fenster des Fahrzeuges, Flugzeuges (insbesondere des Cockpits) oder Objekt angeordnet wird, welches auf das Material auftreffendes Laserlicht zu dem Verwender des Laserlichtes bevorzugt zurückreflektiert. Von dem zurückreflektierten Laserlicht wird zumindest die entsprechende Person dann selbst geblendet und irritiert, was zu einem höheren Eigenschutz der Fahrzeugführer oder Piloten führt.

Relativ kleine und kompakte Laser, wie Laserpointer, Leuchtmittel etc. (DE 10 2005 034 600 A1), werden immer wieder von Personen beispielsweise zum Blenden der Fahrzeugführer oder Piloten verwendet, welche beispielsweise ungenehmigte Demonstrationen aus der Luft beobachten oder weil die Person dem eigenen Spieltrieb nachgeht. Da unterschiedliche Laserpointer häufig Laserlicht unterschiedlicher Wellenlänge emittieren, müssten die Piloten als Schutzausrüstung gegen die Bestrahlung mit Laserlicht in der Regel mehrere, auf die Wellenlänge des jeweiligen Laserlichtes angepasste Laserschutzbrillen besitzen.

Der Erfindung liegt die Aufgabe zugrunde, Piloten oder Fahrzeugführer und / oder - insassen von Flugzeugen, Fahrzeugen etc. auf möglichst einfache Weise vor einem Blenden mit Laserlicht zu schützen.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, Person beispielsweise im Cockpit etc. vor dem Blenden dadurch zu schützen, dass ein Material am Fahrzeug / Flugzeug insbesondere um ein Fenster eingebunden bzw. vorgesehen wird, das Licht durchlässt und diffus macht oder in der bevorzugten Ausführung von der Person weg reflektiert wird.

Bekannt sind Reflexionsmittel unter anderem zur Vermessung- und / oder Lokalisierung von Objekten in einem Raum (DE 10 2008 053 881 A1), zur Überwachung eines Überwachungsbereiches (DE 10 2009 016 146 A1, DE 10 2006 046 152 A1) sowie als Unfallschutzlichtvorhang (DE 36 06 594 A1).

Das in der bevorzugten Ausführung insbesondere retroreflektierendes Material wird bevorzugt großflächig um die Fenster des Fahrzeuges, Objektes oder Flugzeuges (insbesondere des Cockpits) angeordnet, welches auf das Material auftreffendes Laserlicht zu dem Verwender des Laserlichtes zurückreflektiert. Von dem zurückreflektierten Laserlicht wird zumindest die entsprechende Person dann selbst geblendet und irritiert, was zu einem höheren Eigenschutz der Piloten führt.

Als vorteilhaft hat es sich erwiesen, wenn es sich bei dem retroreflektierenden Material um eine flexible Reflektorfolie handelt, die einen spiegelnden Untergrund besitzt, in den Glaskugeln mit einer Größe von etwa 10 - 200 µm eingelassen sind, da die Glaskugeln im sichtbaren Wellenlängenbereich eine optimale Strahlrückführung für den gesamten relevanten Wellenlängenbereich von Laserpointern bewirken (DE 198 59 126 A1).

Es kann sich bei dem retroreflektierenden Material aber auch um eine flexible Kunststofffolie mit retroreflektierenden Pigmenten handeln. Dabei kann die Folie aus einer Vielzahl von Bereichen bestehen, wobei die einzelnen Bereiche retroreflektierende Pigmente enthalten, deren optimale Strahlrückführung wellenlängenabhängig ist. Dadurch erhält man ein retroreflektierendes Material, welches nur bei den üblicherweise von Laserpointern verwendeten Wellenlängen eine optimale Strahlrückführung besitzt.

Als Fahrzeuge werden Landfahrzeuge wie Kraftfahrzeuge, Busse, Nutzfahrzeuge, Bahnen, etc. sowie Fahrzeuge zu Luft und zu See gesehen. Des Weiteren sind alle Formen von Gebäuden, Objekten etc. umfasst, die wenigstens ein Fenster aufweisen.

Weitere Einzelheiten und Vorteile der Erfindung ergeben sich aus den folgenden, anhand von Figuren erläuterten Ausführungsbeispielen. Es zeigen:
- Fig.1: eine schematische Darstellung des vorderen Teiles eines zu schützenden Objektes, hier eines Hubschraubers, mit um ein Cockpitfenster außenseitig angeordneten, retroreflektierenden Material;
- Fig.2: eine schematische Draufsicht auf einen Teil eines retroreflektierenden Materials mit Reflexionsbereichen, deren Strahlrückführung für unterschiedliche Wellenlänge optimiert ist.

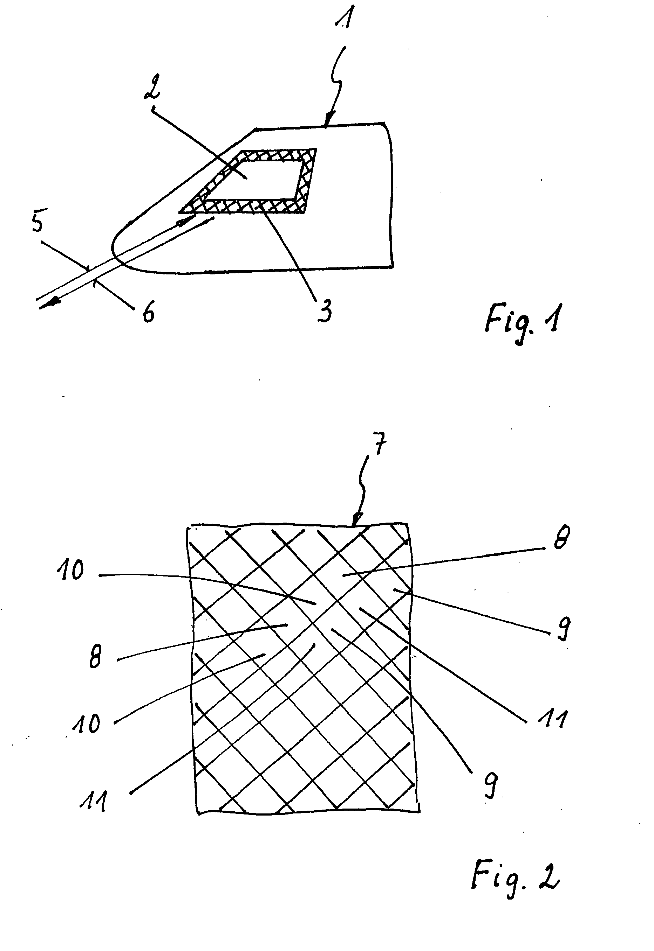

In Fig.1 ist mit 1 ein Hubschrauber bezeichnet, der beispielsweise bei einer ungenehmigten Demonstration zur Beobachtung deren Verlauf eingesetzt ist. Der Hubschrauber 1 weist im Cockpitbereich ein Fenster 2 auf, durch das der entsprechende Pilot den Verlauf der Demonstration beobachten kann.

Erfindungsgemäß ist auf der Außenseite des Hubschraubers 1 um das Fenster 2 herum eine Reflektorfolie 3 aus einem retroreflektierenden Material befestigt, welches auf sie auftreffendes Laserlicht 5 zu dem Verwender des Laserlichtes 5 zurückreflektiert.

Sobald daher eine Person (nicht dargestellt), etwa mittels eines Laserpointers, Laserlicht 5 auf das Fenster des Hubschraubers 1 richtet, wird dieses mindestens teilweise durch die Reflektorfolie 3 zurückgestrahlt und trifft wieder auf den Demonstranten. Dieser wird häufig seinerseits durch das zurückreflektierte Laserlicht 6 geblendet und in der Regel den Laserpointer abschalten oder in eine den Piloten nicht mehr blendende Richtung halten.

Bei dem retroreflektierenden Material kann es sich um eine flexible Reflektorfolie handeln, die einen spiegelnden Untergrund aufweist, in dem Glaskugeln mit einer Größe von etwa 10 - 200 µm eingelassen sind. Derartige Folien weisen den Vorteil auf, daß eine Retroreflexion bei Laserlicht unterschiedlicher Wellenlängen erfolgt, so daß sie bei Verwendung unterschiedlicher Laserpointer gleichermaßen gut wirksam sind.

Sofern gewünscht, kann es sich bei dem retroreflektierenden Material aber auch um flexible Kunststoffolien mit retroreflektierenden Pigmenten handeln, welche jeweils nur für bestimmte Wellenlängen eine optimale Retroreflexion erlauben. Dieses wird dadurch erreicht, dass die Kunststofffolie in Vielzahl von Bereichen aufgeteilt ist, wobei jeweils benachbarte Bereiche retroreflektierende Pigmente enthalten, deren Strahlrückführung für vorgegebene unterschiedliche Wellenlängenbereiche optimiert sind.

Die Draufsicht auf eine derartige mit 7 bezeichnete Reflektorfolie mit unterschiedlichen wellenlängenabhängigen Reflektionsbereichen 8 - 11 ist in Fig.2 schematisch dargestellt. Dabei sind beispielsweise die mit 8 bezeichneten Reflektionsbereiche für Laserlicht mit der Wellenlänge 532 nm, die mit 9 bezeichneten Reflektionsbereiche für Laserlicht mit der Wellenlänge 633 nm, die mit 10 bezeichneten Reflektionsbereiche für Laserlicht mit der Wellenlänge 680 nm und die mit 11 bezeichneten Reflektionsbereiche für Laserlicht mit derWellenlänge 695 nm optimal ausgelegt.

Selbstverständlich können die einzelnen Reflektionsbereiche der Reflektorfolie 7 auch in anderer Reihenfolge angeordnet werden.

### Bezugszeichenliste

- 1: Flugzeug, Hubschrauber (Fahrzeug, Objekt)
- 2: Fenster
- 3: Reflektorfolie, retroreflektierendes Material
- 5: Laserlicht
- 6: reflektiertes Laserlicht
- 7: Reflektorfolie
- 8-11: Reflexionsbereiche

## Patentansprüche

1. Schutzeinrichtung für ein Fahrzeug (1) oder Objekt mit mindestens einem Fenster (2), insbesondere vor Laserlicht, **dadurch gekennzeichnet, dass** die Außenseite des Fahrzeuges (1) mindestens teilweise um das Fenster (2) herum mit einem retroreflektierenden Material (3) versehen ist, das das auf sie auftreffendes Laserlicht (5) durchlässt und diffus macht oder bevorzugten zu dem Verwender des Laserlichtes (5) zurückreflektiert.

2. Schutzeinrichtung nach Anspruch 1, **dadurch gekennzeichnet, dass** es sich bei dem retroreflektierenden Material (3) um eine flexible Reflektorfolie handelt.

3. Schutzeinrichtung nach Anspruch 2, **dadurch gekennzeichnet, dass** die Reflektorfolie (3) einen spiegelnden Untergrund aufweist.

4. Schutzeinrichtung nach Anspruch 3, **dadurch gekennzeichnet, dass** im spiegelnden Untergrund Glaskugeln mit einer Größe von etwa 10 - 200 µm eingelassen sind.

5. Schutzeinrichtung nach Anspruch 1 oder 2, **dadurch gekennzeichnet, dass** es sich bei dem retroreflektierenden Material (3) um eine flexible Kunststoffolie mit retroreflektierenden Pigmenten handelt.

6. Schutzeinrichtung nach Anspruch 5, **dadurch gekennzeichnet, dass** die flexible Kunststofffolie (3) in eine Vielzahl von Bereichen (8-11) aufgeteilt ist.

7. Schutzeinrichtung nach Anspruch 6, **dadurch gekennzeichnet, dass** die jeweils benachbarte Reflektionsbereiche (8-11) retroreflektierende Pigmente enthalten, deren Strahlrückführung für vorgegebene unterschiedliche Wellenlängenbereiche optimiert sind.

8. Schutzeinrichtung Anspruch 7, **dadurch gekennzeichnet, dass** die Reflektionsbereiche (8) für Laserlicht mit der Wellenlänge von 532 nm, die Reflektionsbereiche (9) für Laserlicht mit der Wellenlänge von 633 nm, die Reflektionsbereiche (10) für Laserlicht mit der Wellenlänge von 680 nm und die Reflektionsbereiche (11) für Laserlicht mit der Wellenlänge von 695 nm ausgelegt ist.
